# EUROPEAN PATENT APPLICATION

(11) **EP 4 773 539 A1**
(43) Date of publication of application: **08.07.2026**
(21) Application number: 24876097.7
(22) Date of filing: 19.06.2024
(51) Int. Cl.: H04L 5/00

(54) **RESOURCE USE METHOD AND DEVICE, RESOURCE CONFIGURATION METHOD AND DEVICE, AND STORAGE MEDIUM**

(30) Priority: 08.10.2023 CN 202311295978
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); CHEN, Mengzhu, Shenzhen, Guangdong 518057 (CN); HU, Youjun, Shenzhen, Guangdong 518057 (CN); LIU, Kun, Shenzhen, Guangdong 518057 (CN); GUO, Qiujin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/100112
(87) International publication number: WO 2025/077274

(57) **Abstract**

The present disclosure provides a resource use method and device, a resource configuration method and device, and a storage medium. The resource use method comprises: when a preset condition is met, a first node uses a first resource to monitor a wake-up signal (WUS) and/or a physical downlink control channel (PDCCH) corresponding to a paging occasion (PO).

## Description

The present disclosure claims a priority to Chinese Patent Application No. 202311295978.0, and filed on October 08, 2023, the entire content of which is incorporated into the present application by reference.

### TECHNICAL FIELD

The present disclosure relates to the field of communication technologies, and in particular, to a resource use method and apparatus, a resource configuration method and apparatus, and a storage medium.

### BACKGROUND

In a wireless communication system, a terminal has two states. One of the two state is a connected state, in which the terminal has established a connection with a base station, enabling direct data transmission and reception; and the other of the two state is an idle state (also referred to as a sleep state), in which the terminal cannot communicate directly with the base station. To ensure that the base station may effectively find a terminal in the idle state, the base station generally uses a paging mode, i.e., sending paging signals to the terminal periodically to indicate whether the terminal should hand over from the idle state to the connected state for communication with the base station. The terminal, after receiving corresponding paging information, initiates an uplink random access procedure and enters the connected state to communicate with the base station.

### SUMMARY

In an aspect, a resource use method is provided, and applied to a first node. The resource use method includes: in a case where a preset condition is satisfied, using a first resource to monitor a wake-up signal (WUS) and/or a physical downlink control channel (PDCCH) corresponding to a paging occasion (PO).

In another aspect, a resource configuration method is provided, and applied to a second node. The resource configuration method includes: configuring, for a first node, a first resource corresponding to a wake-up signal (WUS) and/or a physical downlink control channel (PDCCH) corresponding to a paging occasion (PO).

In yet another aspect, a resource use apparatus is provided, and applied to a first node. The resource use apparatus includes a monitoring module, configured to use a first resource to monitor a wake-up signal (WUS) and/or a physical downlink control channel (PDCCH) corresponding to a paging occasion (PO) in a case where a preset condition is satisfied.

In yet another aspect, a resource configuration apparatus is provided, and applied to a second node. The resource configuration apparatus includes a configuration module, configured to configure, for a first node, a first resource corresponding to a wake-up signal (WUS) and/or a physical downlink control channel (PDCCH) corresponding to a paging occasion (PO).

In yet another aspect, a communication apparatus is provided, and includes: a memory and a processor. The memory is coupled with the processor; the memory is configured to store computer program instructions executable by the processor; and the processor, upon executing the computer program instructions, implements the resource use method and the resource configuration method described above.

In yet another aspect, a computer readable storage medium is provided, the computer readable storage medium has stored computer program instructions thereon. The computer program instructions, upon being executed on a computer (e.g., a communication apparatus or a signal transmission apparatus), implement the resource use method and the resource configuration method described above.

In yet another aspect, a computer program product is provided, and the computer program product includes computer program instructions. The computer program instructions, upon being executed, implement the resource use method and the resource configuration method described above.

### BRIEF DESCRIPTION OF THE DRAWINGS

FIG. 1 is a schematic diagram of a terminal monitoring a paging signal based on a DRX cycle according to the embodiments of the present disclosure.
FIG. 2 is a schematic diagram of a terminal performing WUS monitoring according to the embodiments of the present disclosure.
FIG. 3 is a schematic diagram of an architecture of a communication system according to the embodiments of the present disclosure.
FIG. 4 is a flow chart of a resource use method according to the embodiments of the present disclosure.
FIG. 5 is a time-frequency resource diagram according to the embodiments of the present disclosure.
FIG. 6 is another time-frequency resource diagram according to the embodiments of the present disclosure.
FIG. 7 is yet another time-frequency resource diagram according to the embodiments of the present disclosure.
FIG. 8 is yet another time-frequency resource diagram according to the embodiments of the present disclosure.
FIG. 9 is a flow chart of a resource configuration method according to the embodiments of the present disclosure.
FIG. 10 is a structural schematic diagram of a resource use apparatus, according to the embodiments of the present disclosure.
FIG. 11 is a structural schematic diagram of a resource configuration apparatus, according to the embodiments of the present disclosure.
FIG. 12 is a structural schematic diagram of a communication apparatus, according to the embodiments of the present disclosure.

### DETAILED DESCRIPTION

The technical solutions in the embodiments of the present disclosure will be described clearly and completely below in conjunction with the drawings in the embodiments of the present disclosure, and obviously, the described embodiments are merely a part of the embodiments of the present disclosure, not all of the embodiments. Based on the embodiments of the present disclosure, all other embodiments obtained by those ordinary skilled in the art without making inventive efforts fall within the scope of protection of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more. Words, such as "first" and "second", etc., do not limit the quantity and execution order, and the words, such as "first" and "second", etc., also do not necessarily limit different items.

It should be noted that in the present disclosure, the words such as "exemplary (exemplarily)" or "for example (e.g.)", etc., are used to present an example, illustration, or explanation. Any embodiment or design scheme described with "exemplary (exemplarily)" or "for example" in the present disclosure should not be construed as preferred or advantageous over other embodiments or design schemes. Specifically, the use of the terms such as "exemplary (exemplarily)" or "for example", etc., is intended to present related concepts in a specific manner.

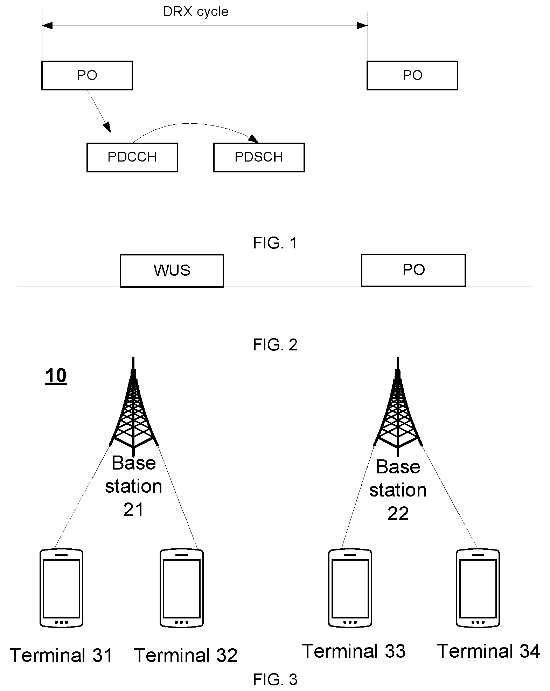

As shown in FIG. 1, a terminal in an idle state wakes up periodically to monitor a paging signal, and monitors a physical downlink control channel (Physical Downlink Control channel, PDCCH) only at a paging occasion (Paging Occasion, PO). If the PDCCH is monitored at the PO, the terminal receives a PDSCH (Physical Downlink Shared channel) according to indication information carried on the monitored PDCCH. If the PDSCH contains a paging indication corresponding to the terminal, then the terminal initiates an uplink random access procedure. If no PDCCH is monitored, the terminal enters and remains in a closed state until a next discontinuous reception (Discontinuous Reception, DRX) cycle.

In the related art, as shown in FIG. 2, a wake-up signal (Wake-up Signal, WUS) is introduced. WUS is used to indicate whether the terminal should monitor the PDCCH at the PO. The purpose is to reduce unnecessary monitoring of the PDCCH by the terminal, thereby saving power consumption of the terminal.

However, the resources currently for the WUS or the PDCCH corresponding to the PO are shared by a plurality of terminals, and thus, the terminal cannot flexibly use dedicated resources to monitor signals and/or channels.

In view of this, the present disclosure provides a resource use method and a resource configuration method. The resource use method includes: in a case where a preset condition is satisfied, using a first resource, by the first node, to monitor a WUS and/or a PDCCH corresponding to a PO. In this way, compared to related technologies, the terminal may use dedicated resources to monitor the WUS and/or the PDCCH corresponding to the PO, thereby improving the flexibility and accuracy of signal monitoring.

The resource use method and the resource configuration method provided in the embodiments of the present disclosure may be applied to systems of various communication standards. For example, the resource use method and the resource configuration method provided in the embodiments of the present disclosure may be applicable to systems, including but not limited to, communication systems such as long term evolution (LTE) systems, various versions of systems based on LTE evolution, fifth generation (5th generation, 5G) systems. In addition, the resource use method and the resource configuration method provided in the embodiments of the present disclosure may also be applicable to future-oriented communication systems (e.g., 6G communication systems), etc.

A network architecture of a mobile communication network (including but not limited to 3G, 4G, 5G and future mobile communication networks) in the embodiments of the present disclosure may at least include a first communication node and a second communication node. It should be understood that, in this example, in downlink, the first communication node may be a network side device (e.g., including but not limited to a base station), and the second communication node may be a terminal side device (e.g., including but not limited to a terminal). Of course, in uplink, the first communication node may also be a terminal side device, and the second communication node may also be a network side device. In a case where the two communication nodes are in device-to-device communication, both the first communication node and the second communication node may be either base stations or terminals. The first communication node and the second communication node may be abbreviated as a first node and a second node, respectively.

Exemplarily, taking an example in which the first communication node is a terminal and the second communication node is a base station, as shown in FIG. 3, it is a communication system according to the embodiments of the present disclosure. The communication system 10 includes a plurality of base stations (e.g., a base station 21 and a base station 22) and a plurality of terminals (e.g., a terminal 31, a terminal 32, a terminal 33, and a terminal 34). The plurality of base stations and the plurality of terminals may be communicatively connected.

In some embodiments, the base station is used to provide radio access services to a plurality of terminals. For example, a base station provides at least one service coverage area (also referred to as a cell). A terminal entering the area may communicate with the base station by a wireless signal, to accept a radio access service provided by the base station. The service coverage areas of base stations may overlap, and a terminal in an overlapped area may receive wireless signals from a plurality of base stations.

In some embodiments, a base station may be connected to a plurality of terminals (e.g., the base station 21 is connected to the terminal 31 and the terminal 32). The terminal 31 and the terminal 32 may be positioned in a same cell, or the terminal 31 and the terminal 32 may also be positioned in different cells. That is, a base station may provide network services to terminals in a cell, and may also provide network services to terminals in a plurality of cells at the same time.

In some embodiments, a base station may be a base station or an evolutional base station (evolutional node B, eNB or eNodeB) in LTE, long term evolution advanced (LTEA), a base station in a 5G network, or a base station in a future communication system (e.g., 6G, etc.), etc. The base station may include various network side devices, such as various macro base stations, micro base stations, home base stations, wireless remote, reconfigurable intelligent surfaces (RISs), routers, wireless fidelity (WIFI) devices, or primary cells and secondary cells, etc.

In some embodiments, the terminal may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a Pad, a computer with a wireless transceiving function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

It should be noted that FIG. 3 is only an exemplary frame diagram, and the number of devices included in FIG. 3 and names of the devices are not limited. In addition to the devices shown in FIG. 3, the communication system may also include other devices, such as core network devices.

The embodiments of the present disclosure do not limit application scenarios. The system architecture and traffic scenarios described in the embodiments of the present disclosure are intended to illustrate the technical solutions of the embodiments of the present disclosure more clearly, and do not limit the technical solutions provided in the embodiments of the present disclosure. Those ordinary skilled in the art can know that, with the evolution of the network architecture and the emergence of new traffic scenarios, the technical solutions provided in the embodiments of the present disclosure are also applicable to similar technical problems.

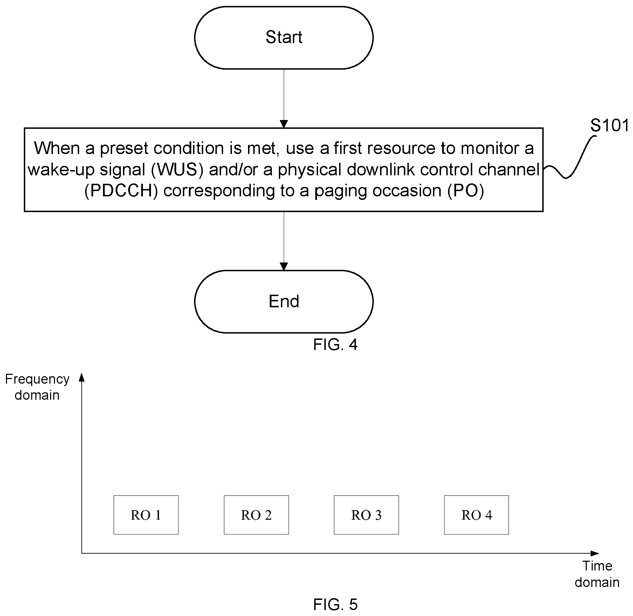

The embodiment of the present disclosure provides a resource use method, which is applied to the first node. As shown in FIG. 4, the resource use method includes S101 as follows: in a case where a preset condition is satisfied, using a first resource to monitor a wake-up signal (WUS) and/or a physical downlink control channel (PDCCH) corresponding to a paging occasion (PO).

In some embodiments, the preset condition includes at least one of: a number of cells handed over within a first time window being less than a first threshold; a measurement value obtained based on a first signal being less than a second threshold; a first cell index obtained based on a second signal being the same as a second cell index, where the second cell index is a preset cell index, a stored cell index, or a cell index of a cell where the first node resides in a connected state; a first cell index obtained based on a second signal belonging to a preset index set; the first node residing on an original cell; the first node residing in an original beam direction; the first node residing in an original tracking area; a first tracking area where the first node resides belonging to a preset tracking area set; a first signaling being enabled or configured; being within a second time window.

In some embodiments, the first signal includes at least one of: a synchronization signal block (SSB), a demodulation reference signal (DMRS), a tracking reference signal (TRS), or a low power synchronization signal (LP-SS).

In some embodiments, the second signal includes at least one of: an SSB, or an LP-SS.

In some embodiments, the first resource is configured via a radio resource control (RRC) signaling.

In some embodiments, the first resource includes at least one of: a time-domain resource, a frequency-domain resource, a code-domain resource, a beam direction, a search space or a control resource set.

In some embodiments, in a case where a number of cells handed over within a first time window is less than a first threshold, the first node uses the first resource to monitor the WUS and/or the PDCCH corresponding to the PO. The first time window and the first threshold are configured by RRC/system information block (SIB) signalings.

Exemplarily, assuming that the first threshold is 3, that is, in a case where the number of cells that the first node hands over within the first time window T is less than 3, the first node uses the first resource to monitor the WUS and/or the PDCCH corresponding to the PO.

In some embodiments, the WUS may be a wake-up signal or a low power wake-up signal (LP-WUS). the LP-WUS is characterized in that it can be received by low power receivers/receiving modules, thereby saving power consumption of the terminal.

Exemplarily, the first node determines a corresponding first resource via the RRC signaling, the first time window is configured as T via the SIB signaling, and the first threshold is configured as M via the RRC signaling. In a case where the number of cells that the first node hands over within T is less than M, the first node monitors the LP-WUS and/or the PDCCH corresponding to the PO on the first resource.

In some other embodiments, in a case where a measurement value obtained by the first node based on the first signal is less than a second threshold, the first node uses the first resource to monitor the WUS and/or the PDCCH corresponding to the PO. The second threshold is configured by the RRC/SIB signaling. The measurement value is one of: reference signal received power (Reference Signal Received Power, RSRP), reference signal received quality (Reference Signal Received Quality, RSRQ), or a received signal strength indicator (Received Signal Strength Indicator, RSSI). Alternatively, the measurement value may be other values used to measure a signal, which is not limited to the present disclosure.

Exemplarily, the first node determines the corresponding first resource via the RRC signaling, and the second threshold is a preset value K. In a case where the RSRP value obtained by the first node according to the LP-SS is k1, and k1 is less than K, the first node monitors the WUS and/or the PDCCH corresponding to the PO on the first resource. The LP-SS is a low power signal used for measurement and/or synchronization.

As another example, the first node determines the corresponding first resource via the RRC signaling, and the second threshold is a preset value K. In a case where the RSRQ value obtained by the first node according to the SSB is k2 and k2 is less than K, the first node monitors the WUS and/or the PDCCH corresponding to the PO on the first resource.

In some other embodiments, the first cell index obtained by the first node based on the second signal is the same as the second cell index. The second cell index is a preset cell index, a stored cell index, or a cell index of a cell where the first node resides in a connected state. Then, the first node uses the first resource to monitor the WUS and/or the PDCCH corresponding to the PO.

Exemplarily, the first node determines the corresponding first resource via the RRC signaling, and the second cell index is the stored cell index, i.e., ID1. In a case where the first cell index obtained by the first node according to the LP-SS is ID1, which is the same as the stored cell index, the first node monitors the LP-WUS and/or the PDCCH corresponding to the PO on the first resource.

In some other embodiments, in a case where the first cell index obtained by the first node based on the second signal belongs to a preset index set, the first node monitors the WUS and/or the PDCCH corresponding to the PO on the first resource.

In some other embodiments, the preset index set is configured by the base station.

Exemplarily, the first node determines the corresponding first resource via the RRC signaling, and the preset index set is {ID1, ID2, ID3}. In a case where the first cell index obtained by the first node according to the LP-SS is ID1 and belongs to the preset index set, the first node monitors the LP-WUS and/or the PDCCH corresponding to the PO on the first resource.

As another example, the first node determines the corresponding first resource via the RRC signaling, the first resource contains three sub-resources, and the preset index set is {ID1, ID2, ID3}. A relationship between sub-resources and preset index sets is predefined. As an example, there is a one-to-one correspondence between sub-resources and index sets. In a case where the first cell index obtained by the first node according to the LP-SS is ID1 and belongs to the preset index set, the first node monitors the LP-WUS and/or the PDCCH corresponding to the PO on the first sub-resource.

In some embodiments, the preset index set is a cell index set consisting of cells within a same tracking area.

Exemplarily, the first node determines the corresponding first resource via the RRC signaling and the preset index set consists of cells within the same tracking area, i.e., {ID1, ID2, ID3}. In a case where the cell index obtained by the first node according to the LP-SS is ID1, which is within the preset cell index set, the first node monitors the LP-WUS and/or the PDCCH corresponding to the PO on the first resource.

In some other embodiments, in a case where the first node resides in the original cell, the first node monitors the WUS and/or the PDCCH corresponding to the PO on the first resource. The original cell is the cell where the first node resides when the first node is in the RRC connected state.

Exemplarily, the first node determines the corresponding first resource via the RRC signaling, and the cell where the first node resides when the first node is in the RRC connected state is cell A. When the first node enters the RRC idle state, if the first node still resides in cell A, then the first node monitors the WUS and/or the PDCCH corresponding to the PO on the first resource.

In some other embodiments, if the first node resides in the original beam direction, then the first node monitors the WUS and/or the PDCCH corresponding to the PO on the first resource. The original beam direction is at least one of: a beam direction corresponding to the first node when a most recent RRC connected state is released, or a beam direction configured for the first node in the RRC connected state.

Exemplarily, the first node determines the corresponding first resource via the RRC signaling, and the beam direction corresponding to the first node when the most recent RRC connected state is released is M. When the first node enters the RRC idle/inactive state and the beam direction corresponding to the first node is still M, the first node monitors the WUS and/or the PDCCH corresponding to the PO on the first resource.

In some other embodiments, in a case where the first node resides on the original tracking area, the first node monitors the LP-WUS and/or the PDCCH corresponding to the PO on the first resource.

Exemplarily, the first node determines the corresponding first resource via the RRC signaling, and the original tracking area where the first node resides in the RRC connected state is original tracking area B. When the first node still resides in the original tracking area B when entering the RRC idle state, the first node monitors the LP-WUS and/or the PDCCH corresponding to the PO on the first resource.

In some other embodiments, in a case where a first tracking area where the first node resides belongs to a preset tracking area set, the first node monitors the WUS and/or the PDCCH corresponding to the PO on the first resource.

Exemplarily, the first node determines the corresponding first resource via the RRC signaling, and the preset tracking area set is {ID5, ID6, ID7}. In a case where a residing first tracking area obtained by the first node according to the LP-SS is ID6, which is within the preset tracking area set, the first node monitors the WUS and/or the PDCCH corresponding to the PO on the first resource.

In some other embodiments, in a case where the first signaling is enabled or configured, the first node monitors the LP-WUS and/or the PDCCH corresponding to the PO on the first resource.

The first signaling includes one of: a signaling for indicating that the first node has low mobility, a signaling for indicating that the first node is in a center of a cell, a signaling for indicating conventional coverage, or a signaling for indicating that a wake-up signal is enabled.

Exemplarily, the first node determines the corresponding first resource via the RRC signaling, and the first signaling is used to indicate that the first node has a low mobility evaluation (lowMobilityEvaluation). If the lowMobilityEvaluation is configured/enabled, the first node monitors the LP-WUS or the PDCCH corresponding to the PO on the first resource.

As another example, the first node determines the corresponding first resource via the RRC signaling, and the first signaling is a signaling for indicating regular coverage. If the signaling for indicating regular coverage is configured/enabled, the first node monitors the LP-WUS or the PDCCH corresponding to the PO on the first resource.

In some other embodiments, within a second time window, the first node monitors the LP-WUS and/or the PDCCH corresponding to the PO on the first resource. The second time window may be determined according to a pre-defined agreement or configured by the RRC signaling.

It can be understood that, in a case where the preset condition is satisfied, the first node may use the first resource to monitor the WUS and/or the PDCCH corresponding to PO. That is, the first node uses dedicated resources to monitor signals and/or channels, which improves the accuracy and flexibility of signal monitoring.

In some embodiments, when the first node monitors the WUS, the first node determines the sending of the physical random access channel (Physical Random Access channel, PRACH) according to at least one of: a second signaling carried by the WUS; a second signaling carried on the PDCCH corresponding to the PO; a second signaling carried on the PDSCH corresponding to the PO; at least one of a time-domain position, a frequency-domain position, a sequence, or a beam direction of the WUS that is monitored; at least one of a time-domain position, a frequency-domain position, scrambling information, or a beam direction of the PDCCH corresponding to the PO that is monitored; at least one of a time-domain position, a frequency-domain position, a sequence, or a beam direction of the primary synchronization signal (Primary Synchronization Signal, PSS), secondary synchronization signal (Secondary Synchronization Signal, SSS), physical broadcast channel (Physical Broadcast Channel, PBCH), and an LP-SS that are monitored; or the RRC signaling.

PRACH (Physical Random Access Channel) is a channel used for physical random access by the first node. The first node sends an access request to the second node through the PRACH channel, in order to access the mobile network and communicate.

In some embodiments, the RRC signaling/the second signaling is used to indicate at least one of: an SSB index, a physical random access channel mask (PRACH MASK) index, a preamble index corresponding to a physical random access signal, a first node index, a physical random access channel occasion (PRACH occasion, RO) index, a time-domain position corresponding to the PRACH, a frequency-domain position corresponding to the PRACH, a beam direction corresponding to the PRACH, an LP-WUS index, or an LP-SS index.

In some embodiments, a mapping relationship between the SSB index and/or the PRACH MASK index and an RO is determined based on the RRC signaling and/or is determined based on a pre-defined agreement; and/or a mapping relationship between the RO index and the RO is determined based on the RRC signaling and/or is determined based on a pre-defined agreement; and/or a mapping relationship between the LP-WUS index and the RO is determined based on the RRC signaling and/or is determined based on a pre-defined agreement; and/or a mapping relationship between the first node index and the RO is determined based on the RRC signaling and/or is determined based on a pre-defined agreement; and/or a mapping relationship between the LP-SS index and the RO is determined based on the RRC signaling and/or is determined based on a pre-defined agreement; and/or a mapping relationship between the preamble index and a preamble corresponding to the PRACH is determined based on the RRC signaling and/or is determined based on a pre-defined agreement.

The RRC signaling is configured based on the first node.

Exemplarily, assuming that the physical random access channel occasion (RO) based on the first node configured by the RRC signaling is as shown in FIG. 5. The first node determines the corresponding first resource via the RRC signaling, and the first node monitors the LP-WUS on the first resource. The mapping relationship between the RO index and the RO is determined based on a pre-defined agreement, and the RO index carried on the LP-WUS is 3, and the preamble index carried on the LP-WUS is 5. Then, the first node determines the sending of the PRACH according to the RO index and the preamble index carried on the LP-WUS, that is, the first node uses a preamble corresponding to the preamble index 5 at RO 3 in FIG. 5 to send the PRACH.

As another example, assuming that the RO based on the first node configured by the RRC signaling is as shown in FIG. 5. The first node determines the corresponding first resource via the RRC signaling, and the first node monitors the PDCCH corresponding to the PO on the first resource, the relationship between the RO index and the RO is determined based on a pre-defined agreement, the RO index carried on the PDCCH transmitted on the PO is 3, and the preamble index carried on the PDCCH transmitted on the PO is 5. Then, the first node determines the sending of the PRACH according to the RO index and the preamble index carried on the PDCCH corresponding to the PO, that is, the first node uses a preamble corresponding to the preamble index 5 at RO 3 in FIG. 5 to send the PRACH.

As another example, assuming that the RO configured according to the RRC signaling is as shown in FIG. 5. The first node determines the corresponding first resource via the RRC signaling, and the first node monitors the LP-WUS on the first resource. The time-domain position corresponding to the first resource is time-domain position 1 and a sequence corresponding to the LP-WUS is sequence A; and the first node determines the position of the RO according to the time-domain position 1. Then, the first node performs signal transmission using the preamble corresponding to sequence A at the first RO, which is located in the time-domain position 1 and subsequent to being offset from the time-domain position 1 by a first offset value. The first offset value is a fixed value, or it may be configured via the RRC signaling.

As another example, the first node determines the corresponding first resource via the RRC signaling, the first node monitors the PO on the first resource, and the time-domain position corresponding to the PRACH, the frequency-domain position corresponding to the PRACH and the preamble index are carried on the PDCCH corresponding to the PO; the first node determines the sending of PRACH according to the time-domain position corresponding to the PRACH, the frequency-domain position corresponding to the PRACH and the preamble index. The time-domain position corresponding to the PRACH may be a slot, a subframe, a radio frame, etc., where the PRACH is positioned; the frequency-domain position corresponding to the PRACH may be the frequency-domain position represented by a starting subcarrier index, a starting RB (Resource Block) index, a relative RB format, etc., where the PRACH is positioned.

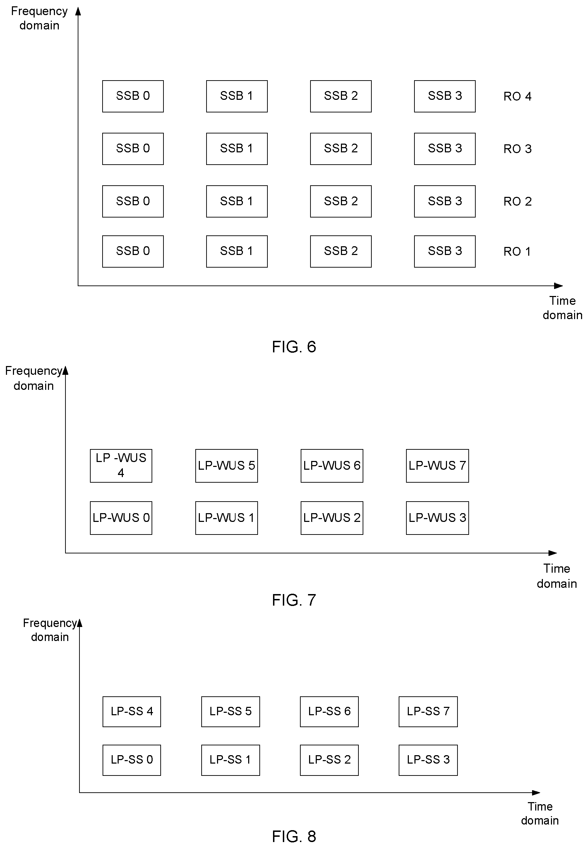

As another example, assuming that the RO time-frequency position configured according to the RRC signaling and the mapping relationship between the RO and the SSB configured according to the RRC signaling are shown in FIG. 6. The relationship between the PRACH MASK index and the RO is determined based on a pre-defined agreement, as shown in Table 1 below. The first node determines the corresponding first resource via the RRC signaling, the first node monitors the PO on the first resource, the synchronization signal/physical broadcast channel (SS/PBCH) index carried on the PDCCH corresponding to the PO is 1, the PRACH MASK index carried on the PDCCH corresponding to the PO is 1, and the preamble index carried on the PDCCH corresponding to the PO is 5. The first node determines the RO for transmitting the PRACH according to the SS/PBCH index and the PRACH MASK index transmitted on the PDCCH corresponding to the PO, and sends the PRACH on the RO using the preamble corresponding to the preamble index 5.

**Table 1**

| PRACH MASK index | RO |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every odd-numbered PRACH occasion |
| 10 | Every even-numbered PRACH occasion |
| 11 | Reserved |
| 12 | Reserved |
| 13 | Reserved |
| 14 | Reserved |
| 15 | Reserved |

As another example, assuming that the RO time-frequency position is configured according to the RRC signaling, and the mapping relationship between the RO and the SSB is also configured via the RRC signaling, as shown in FIG. 6. The relationship between the PRACH MASK index and the RO is determined by Table 1. The RRC signaling based on the first node indicates that the SS/PBCH index is 1, the PRACH MASK index is 1, and the preamble index is 5 and these three RRC signalings are configured in a same information unit. The first node determines the corresponding first resource via the RRC signaling, and the first node monitors the PO on the first resource. The first node determines the RO for transmitting the PRACH according to the SS/PBCH index and the PRACH MASK index configured in the RRC information unit, and sends the PRACH on the preamble corresponding to the preamble index 5 on the RO.

As another example, assuming that the time-frequency position of the RO is configured by the RRC signaling, and the mapping relationship between the RO and the LP-WUS index is also configured by the RRC signaling, as shown in FIG. 7. The LP-WUS index carried on the LP-WUS is 3; and the preamble index configured by the RRC signaling is 5. The first node determines the corresponding first resource via the RRC signaling. In a case where the first node monitors the LP-WUS on the first resource and the LP-WUS index carried on the LP-WUS is 3, the first node uses the preamble corresponding to the preamble index 5 on the RO corresponding to the LP-WUS 3 to send the PRACH.

As another example, assuming that the time-frequency position of the RO is configured by the RRC signaling, and the mapping relationship between the RO and the LP-WUS index is determined by a pre-defined agreement, as shown in FIG. 7. The preamble index configured by the RRC signaling is 5. The first node determines the corresponding first resource via the RRC signaling, in a case where the first node monitors the LP-WUS on the first resource and the LP-WUS index corresponding to the LP-WUS is 3, the first node uses the preamble corresponding to the preamble index 5 on the RO corresponding to the LP-WUS 3 to send the PRACH.

As another example, assuming that the time-frequency position of the RO is configured by the RRC signaling, and the mapping relationship between the RO and the LP-WUS index is determined by a pre-defined agreement, as shown in FIG. 7. The preamble index configured by the RRC signaling is 5. The first node determines the corresponding first resource via the RRC signaling, the LP-WUS in the first resource corresponds to 8 time-domain positions, which correspond to 8 beam directions of the LP-WUS, respectively. The first node monitors that the energy of the LP-WUS in the third beam direction is the largest; therefore, the first node uses the preamble corresponding to the preamble index 5 on the RO corresponding to the LP-WUS 3 to send the PRACH.

As another example, assuming that the time-frequency position of the RO is configured by the RRC signaling, and the mapping relationship between the RO and the LP-WUS index is determined by a pre-defined agreement, as shown in FIG. 7. The preamble index configured by the RRC signaling is 5. The first node determines the corresponding first resource via the RRC signaling, and the LP-WUS in the first resource corresponds to 8 time-domain locations. The first node monitors the LP-WUS in the direction of the third beam, so the first node uses the preamble with preamble index 5 corresponding to the RO corresponding to LP-WUS 3 to send PRACH.

As another example, assuming that the RO time-frequency position is configured by the RRC signaling, and the mapping relationship between the RO and the LP-WUS index is determined based on a pre-defined agreement, as shown in FIG. 7. The first node determines the corresponding first resource via RRC signaling, and the LP-WUS in the first resource corresponds to 8 time-domain locations. The first node monitors the LP-WUS in the third beam direction, and the sequence index corresponding to the LP-WUS is 2, therefore, the first node uses the preamble corresponding to the sequence index 2 corresponding to the LP-WUS on the RO corresponding to the LP-WUS 3 to send the PRACH.

As another example, assuming that the time-frequency position of the RO is configured by the RRC signaling, and the mapping relationship between the RO and the LP-WUS index is configured by the RRC signaling, as shown in FIG. 7. The first node determines the corresponding first resource via the RRC signaling, the LP-WUS in the first resource corresponds to 8 time-domain positions. The first node monitors the LP-WUS in the third beam direction, and the sequence index corresponding to the LP-WUS is 2, therefore, the first node uses the preamble corresponding to the sequence index 2 corresponding to the LP-WUS on the RO corresponding to the LP-WUS 3 to send the PRACH.

As another example, assuming that the time-frequency position of the RO is configured by the RRC signaling, and the mapping relationship between the RO and the LP-WUS index is determined based on the pre-defined agreement, as shown in FIG. 7. The first node determines the corresponding first resource via the RRC signaling, the LP-WUS in the first resource corresponds to 8 time-domain positions. The first node monitors the LP-WUS in the third beam direction, and the sequence index corresponding to the LP-WUS is H, therefore, the first node uses the preamble corresponding to the sequence index H corresponding to the LP-WUS on the RO corresponding to the LP-WUS 3 to send the PRACH.

As another example, assuming that the time-frequency position of the RO is configured by the RRC signaling, and the mapping relationship between the RO and the LP-SS index is configured by the RRC signaling, as shown in FIG. 8. The preamble index configured by the RRC signaling is 5. The first node determines the corresponding first resource via the RRC signaling, the first node monitors the LP-WUS on the first resource, and when monitoring the LP-SS in a subsequent process, monitors that the energy of the LP-SS in the third beam direction is the largest and the first node uses the preamble corresponding to the preamble index 5 on the RO corresponding to the LP-SS 3 to send the PRACH.

Based on this, the first node receives the WUS and determines the sending of the PRACH according to different indications, so that the second node may accurately receive the access request of the first node device and allocate the corresponding resources to the first node device.

In some embodiments, in a case where a preset condition is satisfied, the first node uses a third resource to send the PRACH.

The third resource is configured via the RRC signaling.

In some embodiments, the RRC signaling indicates at least one of: an SSB index, a PRACH MASK index, a preamble index, a first node index, an RO index, a time-domain position, a frequency-domain position, or a beam direction.

In some embodiments, a mapping relationship between the SSB index and/or the PRACH MASK index and an RO is determined based on the RRC signaling and/or is determined based on a pre-defined agreement; and/or a mapping relationship between the RO index and the RO is determined based on the RRC signaling and/or is determined based on a pre-defined agreement; and/or a mapping relationship between the first node index and the RO is determined based on the RRC signaling and/or is determined based on a pre-defined agreement; and/or a relationship between the preamble index and a preamble corresponding to a timing for sending the PRACH is determined based on the RRC signaling and/or a pre-defined agreement.

In some embodiments, the RRC signaling is configured based on the first node.

Exemplarily, assuming that the RO based on the first node configured by the RRC signaling is as shown in FIG. 5, and the relationship between the RO index and the RO is determined based on a pre-defined agreement. The RO index configured by the RRC signaling is 3 and the preamble index configured by the RRC signaling is 5; and the first node uses the preamble corresponding to the preamble index 5 at RO 3 to send the PRACH.

As another example, assuming that the RRC signaling indicates the time-domain position corresponding to the PRACH, the frequency-domain position corresponding to the PRACH, and the preamble index. The first node determines the sending of PRACH according to the time-domain position corresponding to the PRACH, the frequency-domain position corresponding to the PRACH, and the preamble index indicated by the RRC signaling. The time-domain position corresponding to the PRACH may be a slot, a subframe, a radio frame, etc., where the PRACH is positioned. The frequency-domain position corresponding to the PRACH may be the frequency-domain position represented by a starting subcarrier index, a starting RB index, a relative RB format, etc., where the PRACH is positioned.

As another example, assuming that the RO configured according to the RRC signaling and the mapping relationship between the RO and the SSB configured according to the RRC signaling are shown in FIG. 6. The relationship between the PRACH MASK index and the RO is determined based on a pre-defined agreement, as shown in Table 1. The RRC signaling indicates that the SS/PBCH index is 1, the PRACH MASK index is 1, and the preamble index is 5. The first node determines the RO for transmitting the PRACH according to the SS/PBCH index and the PRACH MASK index indicated by the RRC signaling, and determines the preamble to be sent according to the preamble index. These three RRC signalings are configured in the same information unit.

As another example, assuming that the RO time-frequency position configured according to the RRC signaling and the mapping relationship between the RO and the SSB configured according to the RRC signaling are shown in FIG. 6. The relationship between the PRACH MASK index and the RO is determined by Table 1. The RRC signaling based on the first node indicates that the SS/PBCH index is 1, the PRACH MASK index is 1, and the preamble index is 5 and these three RRC signalings are configured in a same information unit. The first node determines the RO for transmitting the PRACH according to the SS/PBCH index and the PRACH MASK index indicated by the RRC signaling, and determines the preamble to be sent according to the preamble index.

As another example, assuming that the RO time-frequency position configured according to the RRC signaling and the mapping relationship between the RO and the SSB configured according to the RRC signaling are shown in FIG. 6. The relationship between the PRACH MASK index and the RO is determined by Table 1. The RRC signaling based on the first node indicates that the first node index is A, and the relationship between the first node index, SS/PBCH index, PRACH MASK index, and preamble index is determined based on a pre-defined agreement, as shown in Table 2. The first node determines the SS/PBCH index, the PRACH MASK index, and the preamble index according to the first node index indicated by the RRC signaling, the first node determines the RO for transmitting the PRACH according to the SS/PBCH index and PRACH MASK index, and determines the preamble to be sent according to the preamble index.

**Table 2**

| First node index | SS/PBCH index | PRACH MASK index | preamble index |
|---|---|---|---|
| 1 | 1 | 1 | 1 |
| 2 | 1 | 1 | 2 |
| 3 | 1 | 1 | 3 |
| ... | ... | ... | ... |

As another example, assuming that the time-frequency position of the RO is configured according to the RRC signaling, the RRC signaling based on the first node indicates that the first node index is A, and the relationship between the index of the first node and the RO and the preamble index is determined based on a pre-defined agreement, as shown in Table 3. The terminal determines the RO and the preamble index according to the first node index indicated by the RRC signaling, and sends the preamble on the RO that is determined.

**Table 3**

| First node index | RO index | preamble index |
|---|---|---|
| 1 | 1 | 1 |
| 2 | 1 | 2 |
| 3 | 1 | 3 |
| ... | ... | ... |

Based on this, in a case where the preset condition is satisfied, the first node uses the third resource to send the PRACH, which may ensure that the first node may successfully complete the access process and establish a stable communication link with the base station.

In some embodiments, in a case where the preset condition is satisfied, the first node uses a fourth resource to send a sounding reference signal (Sounding Reference Signal, SRS).

Exemplarily, the first node uses the fourth resource to send the SRS, and the fourth resource is a dedicated SRS resource set for the first node and is configured via the RRC signaling.

In some embodiments, in a case where the preset condition is not satisfied, a second resource is used to monitor the wake-up signal (WUS) and/or the physical downlink control channel (PDCCH) corresponding to the paging occasion (PO). The second resource is configured via the RRC signaling and/or the SIB signaling, and the second resource includes at least one of: one or more of a frequency-domain resource, a code-domain resource, a beam direction, a control resource set, or a search space.

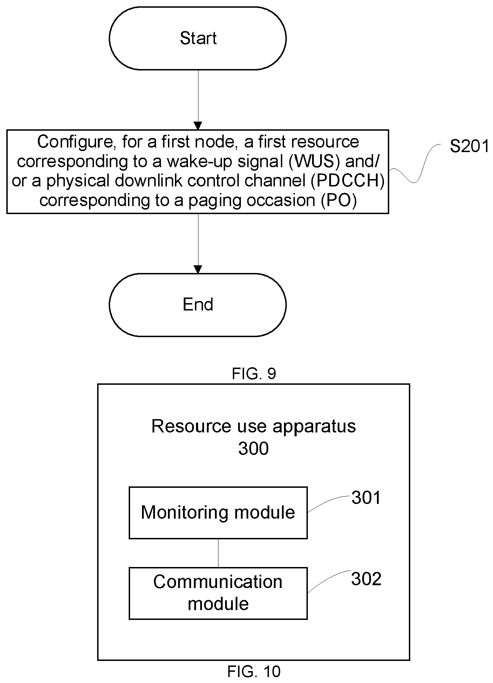

FIG. 9 is a flow chart of a resource configuration method according to the present disclosure, applied to the second node. As shown in FIG. 9, the resource configuration method includes S201 below: configuring, for a first node, a first resource corresponding to a wake-up signal (WUS) and/or a physical downlink control channel (PDCCH) corresponding to a paging occasion (PO).

In some embodiments, the first resource is configured via an RRC signaling.

In some embodiments, the first resource includes at least one of: a time-domain resource, a frequency-domain resource, a code-domain resource, a beam direction, a search space, or a control resource set.

In some embodiments, the second node configures the PRACH transmission for the first node via the RRC signaling and the PRACH transmission is required to be configured with at least one of: an SSB index, a physical random access channel mask (PRACH MASK) index, a preamble index corresponding to a physical random access signal, a first node index, a physical random access channel occasion (RO) index, a time-domain position corresponding to a PRACH, a frequency-domain position corresponding to a PRACH, a beam direction corresponding to a PRACH, a low power wake-up signal (LP-WUS) index, or an LP-SS index.

In some embodiments, the second node configures, for the first node, the third resource corresponding to the PRACH. The third resource is configured via the RRC signaling.

In some embodiments, the RRC signaling indicates at least one of: an SSB index, a PRACH MASK index, a preamble index, a first node index, an RO index, a time-domain position, a frequency-domain position, or a beam direction.

In some embodiments, the RRC signaling is configured based on the first node.

Based on this, the second node may configure, for first node, a first resource corresponding to the wake-up signal (WUS) and/or the physical downlink control channel (PDCCH) corresponding to the paging occasion (PO), so that when the preset condition is satisfied, the first node may hand over to use the first resource to monitor the WUS and/or the PDCCH corresponding to PO, which reduces the burden of the first node on signal monitoring in interference and collision environments, improves the accuracy and flexibility of signal monitoring, and also reduces the power consumption of the first node.

The above introduces the solutions of the embodiments of the present disclosure mainly from the perspective of methods. A resource use apparatus and a resource configuration apparatus are also illustrated below. The resource use apparatus is configured to perform the resource use method in any of the above embodiments and implementations thereof, and the resource configuration apparatus is configured to perform the resource configuration method in any of the above embodiments and implementations thereof. It can be understood that, in order to implement the resource use method and the resource configuration method, the resource use apparatus and the resource configuration apparatus contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the resource use apparatus and the resource configuration apparatus may be divided into functional modules according to the above-mentioned method embodiments, and for example, each functional module may be divided corresponding to each function, or two or more functions may be integrated into one functional module. The above integrated module is implemented in the form of hardware or in the form of software. It should be noted that the division of the modules in embodiments of the present disclosure is schematic, which is only a logical functional division, and there may be other divisions for in actual implementations. The example in which each functional module is divided corresponding to each function, is taken for explanation below.

FIG. 10 is a resource use apparatus according to the embodiments of the present disclosure, applied to a first node. The resource use apparatus 300 includes: a monitoring module 301 and a communication module 302.

The monitoring module 301, is configured to use a first resource to monitor a wake-up signal (WUS) and/or a physical downlink control channel (PDCCH) corresponding to a paging occasion (PO) when a preset condition is satisfied.

In some embodiments, the preset condition includes at least one of: a number of cells handed over within a first time window being less than a first threshold; a measurement value obtained based on a first signal being less than a second threshold; a first cell index obtained based on a second signal being the same as a second cell index, where the second cell index is a preset cell index, a stored cell index, or a cell index of a cell where the first node resides in a connected state; a first cell index obtained based on a second signal belonging to a preset index set; the first node residing on an original cell; the first node residing on an original beam direction; the first node residing on an original tracking area; a first tracking area where the first node resides belonging to a preset tracking area set; a first signaling being enabled or configured; being within a second time window.

In some embodiments, the first signal includes at least one of: a synchronization signal block (SSB), a demodulation reference signal (DMRS), a tracking reference signal (TRS), or a low power synchronization signal (LP-SS).

In some embodiments, the second signal includes at least one of: an SSB, or an LP-SS.

In some embodiments, the first signaling includes one of: a signaling for indicating that the first node has low mobility, a signaling for indicating that the first node is in a center of a cell, a signaling for indicating conventional coverage, or a signaling for indicating that a wake-up signal is enabled.

In some embodiments, the first resource is configured via a radio resource control (RRC) signaling.

In some embodiments, the first resource includes at least one of: a time-domain resource, a frequency-domain resource, a code-domain resource, a beam direction, a search space or a control resource set.

In some embodiments, the communication module 302, is configured to receive the WUS and determine sending of a physical random access channel (PRACH) according to at least one of: a second signaling carried by the WUS; a second signaling carried on the PDCCH corresponding to the PO; a second signaling carried on a PDSCH corresponding to the PO; at least one of a time-domain position, a frequency-domain position, a sequence, or a beam direction of the WUS that is monitored; at least one of a time-domain position, a frequency-domain position, scrambling information or a beam direction of the PDCCH corresponding to the PO that is monitored; at least one of a time-domain position, a frequency-domain position, a sequence or a beam direction of a primary synchronization signal (PSS), a secondary synchronization signal (SSS), a physical broadcast channel (PBCH) and an LP-SS that are monitored; or an RRC signaling.

In some embodiments, the RRC signaling/the second signaling is used to indicate at least one of: an SSB index, a physical random access channel mask (PRACH MASK) index, a preamble index corresponding to a physical random access signal, a first node index, a physical random access channel occasion (RO) index, a time-domain position corresponding to the PRACH, a frequency-domain position corresponding to the PRACH, a beam direction corresponding to the PRACH, an LP-WUS index, or an LP-SS index.

In some embodiments, a mapping relationship between the SSB index and/or the PRACH MASK index and an RO is determined based on the RRC signaling and/or is determined based on a pre-defined agreement; and/or a mapping relationship between the RO index and an RO is determined based on the RRC signaling and/or is determined based on a pre-defined agreement; and/or a mapping relationship between the LP-WUS index and an RO is determined based on the RRC signaling and/or is determined based on a pre-defined agreement; and/or a mapping relationship between the first node index and an RO is determined based on the RRC signaling and/or is determined based on a pre-defined agreement; and/or a mapping relationship between the LP-SS index and an RO is determined based on the RRC signaling and/or is determined based on a pre-defined agreement; and/or a mapping relationship between the preamble index and a preamble corresponding to the PRACH is determined based on the RRC signaling and/or is determined based on a pre-defined agreement.

In some embodiments, the monitoring module 301, is configured to use a second resource to monitor the wake-up signal (WUS) and/or the physical downlink control channel (PDCCH) corresponding to the paging occasion (PO) when the preset condition is not satisfied. The second resource is configured via the RRC signaling and/or the SIB signaling, and the second resource includes at least one of: one or more of a time-domain resource, a frequency-domain resource, a code-domain resource, a beam direction, a control resource set, or a search space.

In some embodiments, the communication module 302, is configured to use a third resource to send a PRACH when the preset condition is satisfied.

In some embodiments, the third resource is configured via an RRC signaling.

In some embodiments, the RRC signaling indicates at least one of: an SSB index, a PRACH MASK index, a preamble index, a first node index, an RO index, a time-domain position, a frequency-domain position or a beam direction.

In some embodiments, a mapping relationship between the SSB index and/or the PRACH MASK index and an RO is determined based on the RRC signaling and/or is determined based on a pre-defined agreement; and/or a mapping relationship between the RO index and the RO is determined based on the RRC signaling and/or is determined based on a pre-defined agreement; and/or a mapping relationship between the first node index and the RO is determined based on the RRC signaling and/or is determined based on a pre-defined agreement; and/or a relationship between the preamble index and a preamble corresponding to a timing for sending the PRACH is determined based on the RRC signaling and/or a pre-defined agreement.

In some embodiments, the RRC signaling is configured based on the first node.

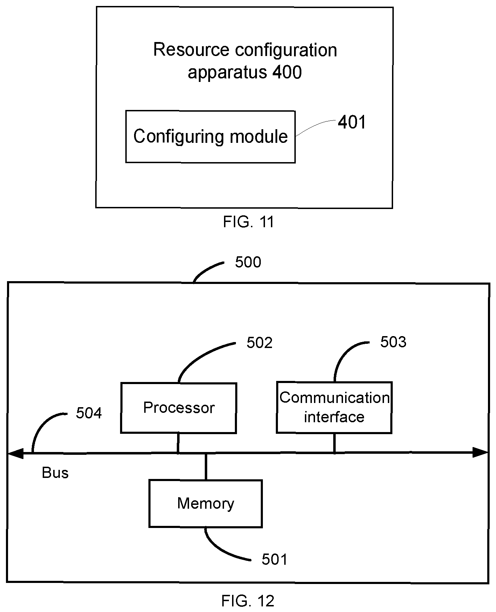

FIG. 11 is a resource configuration apparatus according to the embodiments of the present disclosure, applied to a second node. The resource configuration apparatus 400 includes: a configuring module 401.

The configuring module 401, is configured to configure, for a first node, a first resource corresponding to a wake-up signal (WUS) and/or a physical downlink control channel (PDCCH) corresponding to a paging occasion (PO), where the first resource is configured via a radio resource control (RRC) signaling.

In some embodiments, the first resource includes at least one of: a time-domain resource, a frequency-domain resource, a code-domain resource, a beam direction, a search space or a control resource set.

In some embodiments, a PRACH transmission is configured for the first node via the RRC signaling, and the PRACH transmission is required to be configured with at least one of: an SSB index, a physical random access channel mask (PRACH MASK) index, a preamble index corresponding to a physical random access signal, a first node index, a physical random access channel occasion (RO) index, a time-domain position corresponding to a PRACH, a frequency-domain position corresponding to a PRACH, a beam direction corresponding to a PRACH, a low power wake-up signal (LP-WUS) index, or an LP-SS index.

In some embodiments, the first node configures the third resource corresponding to the PRACH. The third resource is configured via the RRC signaling.

In some embodiments, the RRC signaling indicates at least one of: an SSB index, a PRACH MASK index, a preamble index, a first node index, an RO index, a time-domain position, a frequency-domain position or a beam direction.

In some embodiments, the RRC signaling is configured based on the first node.

In a case where the functions of the above integrated modules are implemented in the form of hardware, the embodiments of the present disclosure further provide a structure of a communication apparatus. The communication apparatus is configured to perform the resource use method and the resource configuration method provided in the embodiments of the present disclosure. As shown in FIG. 12, the communication apparatus 500 includes a communication interface 503, a processor 502 and a bus 504. In some embodiments, the communication apparatus may further include a memory 501.

The processor 502 may be modules and circuits that implement or perform various exemplary logical blocks described in conjunction with the embodiments of the present disclosure. The processor 502 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 502 may also be a combination that implements computing functions, for example, containing a combination of one or more microprocessors, a combination of a DSP (Digital Signal Processor) and a microprocessor, or the like.

The communication interface 503 is configured to connect with other devices via a communication network. The communication network may be an Ethernet, a radio access network, a wireless local area network (WLAN), or the like.

The memory 501 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 501 may exist independently of the processor 502, and the memory 501 may be connected to the processor 502 via the bus 504 and is used for storing instructions or program codes. The processor 502, when calling and executing the instructions or program codes stored in the memory 501, is capable of implementing the resource use method and the resource configuration method, provided in the embodiments of the present disclosure.

As another implementation, the memory 501 may be integrated with the processor 502.

The bus 504 may be an extended industry standard architecture (EISA) bus or the like. Buses 504 may be divided into address buses, data buses, control buses, and the like. For the convenience of representation, only one thick line is used in FIG. 12 for representation, but it does not mean that there is only one bus or one type of bus.

Some embodiments of the present disclosure provide a computer readable storage medium (e.g., a non-transitory computer readable storage medium), and the computer-readable storage medium has stored computer program instructions therein that, when running on a computer, cause the computer to perform the resource use method and the resource configuration method as described in any embodiment of the above-mentioned embodiments.

In an exemplary implementation, the computer may be the above-mentioned communication apparatus, and the present disclosure does not limit the specific form of the computer.

In some examples, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine-readable storage media for storing information. The term "machine readable storage medium" may include, but be not limited to, a radio channel and various other media capable of storing, containing, and/or carrying instructions and/or data.

The embodiments of the present disclosure provide a computer program product containing instructions, and the computer program product, when running on a computer, causes the computer to perform the resource use method and the resource configuration method as described in any embodiment of the above-mentioned embodiments.

In the technical solutions provided in the present disclosure, in a case where the preset condition is satisfied, the first node may use the first resource to monitor the WUS and/or the PDCCH corresponding to the PO, that is, the terminal may use dedicated resources to monitor the WUS and/or the PDCCH corresponding to the PO, thereby improving the flexibility and accuracy of signal monitoring.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A resource use method, applied to a first node, **characterized in that** the method comprises:
in a case where a preset condition is satisfied, using a first resource to monitor a wake-up signal (WUS) and/or a physical downlink control channel (PDCCH) corresponding to a paging occasion (PO).

2. The method according to claim 1, wherein the preset condition comprises at least one of:
a number of cells handed over within a first time window being less than a first threshold;
a measurement value obtained based on a first signal being less than a second threshold;
a first cell index obtained based on a second signal being the same as a second cell index, wherein the second cell index is a preset cell index, a stored cell index, or a cell index of a cell where the first node resides in a connected state;
a first cell index obtained based on a second signal belonging to a preset index set;
the first node residing on an original cell;
the first node residing in an original beam direction;
the first node residing in an original tracking area;
a first tracking area where the first node resides belonging to a preset tracking area set;
a first signaling being enabled or configured; or
being within a second time window.

3. The method according to claim 2, wherein the first signal comprises at least one of: a synchronization signal block (SSB), a demodulation reference signal (DMRS), a tracking reference signal (TRS), or a low power synchronization signal (LP-SS).

4. The method according to claim 2, wherein the second signal comprises at least one of: an SSB, or an LP-SS.

5. The method according to claim 2, wherein the first signaling comprises one of: a signaling for indicating that the first node has low mobility, a signaling for indicating that the first node is in a center of a cell, a signaling for indicating conventional coverage, or a signaling for indicating that a wake-up signal is enabled.

6. The method according to claim 1, wherein the first resource is configured via a radio resource control (RRC) signaling.

7. The method according to claim 1, wherein the first resource comprises at least one of: a time-domain resource, a frequency-domain resource, a code-domain resource, a beam direction, a search space or a control resource set.

8. The method according to claim 1, further comprising:
receiving the WUS, and determining sending of a physical random access channel (PRACH) according to at least one of:
a second signaling carried by the WUS;
a second signaling carried on the PDCCH corresponding to the PO;
a second signaling carried on a physical downlink shared channel (PDSCH) corresponding to the PO;
at least one of a time-domain position, a frequency-domain position, a sequence, or a beam direction of the WUS that is monitored;
at least one of a time-domain position, a frequency-domain position, scrambling information or a beam direction of the PDCCH corresponding to the PO that is monitored;
at least one of a time-domain position, a frequency-domain position, a sequence or a beam direction of a primary synchronization signal (PSS), a secondary synchronization signal (SSS), a physical broadcast channel (PBCH) and an LP-SS that are monitored; or
an RRC signaling.

9. The method according to claim 8, wherein the RRC signaling/the second signaling is used to indicate at least one of: an SSB index, a physical random access channel mask (PRACH MASK) index, a preamble index corresponding to a physical random access signal, a first node index, a physical random access channel occasion (RO) index, a time-domain position corresponding to a PRACH, a frequency-domain position corresponding to a PRACH, a beam direction corresponding to a PRACH, a low power wake-up signal (LP-WUS) index, or an LP-SS index.

10. The method according to claim 9, wherein
a mapping relationship between the SSB index and/or the PRACH MASK index and an RO is determined based on the RRC signaling and/or is determined based on a pre-defined agreement; and/or
a mapping relationship between the RO index and an RO is determined based on the RRC signaling and/or is determined based on a pre-defined agreement; and/or
a mapping relationship between the LP-WUS index and an RO is determined based on the RRC signaling and/or is determined based on a pre-defined agreement; and/or
a mapping relationship between the first node index and an RO is determined based on the RRC signaling and/or is determined based on a pre-defined agreement; and/or
a mapping relationship between the LP-SS index and an RO is determined based on the RRC signaling and/or is determined based on a pre-defined agreement; and/or
a mapping relationship between the preamble index and a preamble corresponding to the PRACH is determined based on the RRC signaling and/or is determined based on a pre-defined agreement.

11. The method according to claim 1, further comprising:
in a case where the preset condition is not satisfied, using a second resource to monitor the WUS and/or the PDCCH corresponding to the PO; wherein the second resource is configured via an RRC signaling and/or a system information block (SIB) signaling, and the second resource comprises at least one of: a time-domain resource, a frequency-domain resource, a code-domain resource, a beam direction, a control resource set, or a search space.

12. The method according to claim 1, further comprising:
in a case where the preset condition is satisfied, using a third resource to send a PRACH.

13. The method according to claim 12, wherein the third resource is configured via an RRC signaling.

14. The method according to claim 13, wherein the RRC signaling indicates at least one of: an SSB index, a PRACH MASK index, a preamble index, a first node index, an RO index, a time-domain position, a frequency-domain position or a beam direction.

15. The method according to claim 14, wherein
a mapping relationship between the SSB index and/or the PRACH MASK index and an RO is determined based on the RRC signaling and/or is determined based on a pre-defined agreement; and/or
a mapping relationship between the RO index and an RO is determined based on the RRC signaling and/or is determined based on a pre-defined agreement; and/or
a mapping relationship between the first node index and an RO is determined based on the RRC signaling and/or is determined based on a pre-defined agreement; and/or
a relationship between the preamble index and a preamble corresponding to a timing for sending the PRACH is determined based on the RRC signaling and/or a pre-defined agreement.

16. The method according to any one of claims 6, 8 or 13, wherein the RRC signaling is configured based on the first node.

17. A resource configuration method, applied to a second node, **characterized in that** the method comprises:
configuring, for a first node, a first resource corresponding to a wake-up signal (WUS) and/or a physical downlink control channel (PDCCH) corresponding to a paging occasion (PO), wherein the first resource is configured via a radio resource control (RRC) signaling.

18. The method according to claim 17, wherein the first resource comprises at least one of: a time-domain resource, a frequency-domain resource, a code-domain resource, a beam direction, a search space or a control resource set.

19. The method according to claim 17, wherein a physical random access channel (PRACH) transmission is configured for the first node via the RRC signaling, and the PRACH transmission is required to be configured with at least one of: a synchronization signal block (SSB) index, a physical random access channel mask (PRACH MASK) index, a preamble index corresponding to a physical random access signal, a first node index, a physical random access channel occasion (RO) index, a time-domain position corresponding to a PRACH, a frequency-domain position corresponding to a PRACH, a beam direction corresponding to a PRACH, a low power wake-up signal (LP-WUS) index, or a low power synchronization signal (LP-SS) index.

20. The method according to claim 17, wherein a third resource corresponding to a PRACH is configured for the first node; and the third resource is configured via the RRC signaling.

21. The method according to claim 20, wherein the RRC signaling indicates at least one of: an SSB index, a PRACH MASK index, a preamble index, a first node index, an RO index, a time-domain position, a frequency-domain position or a beam direction.

22. The method according to any one of claims 18 to 21, wherein the RRC signaling is configured based on the first node.

23. A communication apparatus, **characterized by** comprising: a memory and a processor; wherein the memory and the processor are coupled; the memory is configured to store instructions executable by the processor; and the processor, upon executing the instructions, performs the method according to any one of claims 1 to 22.

24. A computer readable storage medium, **characterized in that** the computer readable storage medium has stored computer instructions thereon, and the computer instructions, upon being executed on a communication apparatus, enable the communication apparatus to perform the method according to any one of claims 1 to 22.
